# EUROPÄISCHE PATENTSCHRIFT

(11) **EP 1 222 788 B1**
(45) Veröffentlichungstag und Bekanntmachung des Hinweises auf die Patenterteilung: **25.07.2007**
(21) Anmeldenummer: 00974277.6
(22) Anmeldetag: 02.09.2000
(51) Int. Cl.: H04L 27/26, H04J 3/06, H04L 7/04

(54) **VERFAHREN ZUM EMPFANG VON FUNKSIGNALEN ÜBER EINEN FUNKKANAL**
METHOD FOR RECEIVING RADIO SIGNALS VIA A RADIO CHANNEL
PROCEDE DE RECEPTION DE SIGNAUX RADIO PAR L'INTERMEDIAIRE D'UN CANAL RADIO

(30) Priorität: 17.09.1999 DE 19944495
(43) Veröffentlichungstag der Anmeldung: 17.07.2002
(73) Patentinhaber: ROBERT BOSCH GMBH, 70442 Stuttgart (DE)
(72) Erfinder: STEPEN, Markus, 31171 Nordstemmen (DE)
(86) Internationale Anmeldenummer: PCT/DE2000/003021
(87) Internationale Veröffentlichungsnummer: WO 2001/022649

(56) Entgegenhaltungen:
- EP-A- 0 722 235
- EP-A- 0 827 304
- US-A- 5 706 314
- US-A- 5 790 784

## Beschreibung

### Stand der Technik

Die Erfindung geht aus von einem Verfahren zum Empfang von Funksignalen über einen Funkkanal nach der Gattung des unabhängigen Patentanspruchs.

Es ist bereits bekannt, daß eine Zeitsynchronisation bei Funksignalen, die in Rahmen aufgeteilt sind, in einem Empfänger durchgeführt wird. Dabei wird insbesondere beim DAB (Digital Audio Broadcasting) im Empfänger ein spannungsgesteuerter Oszillator zur Erzeugung einer Taktfrequenz im Empfänger verwendet. Ist die Taktfrequenz des spannungsgesteuerten Oszillators ungleich der Taktfrequenz, die im Sender verwendet wurde, ergibt sich ein Fehler bei der Zeitsynchronisation, indem sich der tatsächliche Rahmenanfang aufgrund des Frequenzfehlers immer weiter von dem Empfänger angenommenen Rahmenbeginn entfernt. Dies wird nachgeregelt, indem die Frequenz des spannungsgesteuerten Oszillators durch eine Veränderung der Spannung dieses Oszillators nachgeregelt wird.

In EP-A2 872 304 wird eine Synchronisierung offenbart, bei der eine Zeitdifferenz zwischen dem Empfänger und dem Sender bestimmt wird. Dies basiert auf einer Differenz zwischen einer Empfangszeit und einer Detektionszeit. Weiterhin wird ein Mittelwert der Abweichung gebildet. In Abhängigkeit von den Abweichungen wird ein Korrektursignal gebildet.

Vorteile der Erfindung

Bei einer Empfangsunterbrechung, z.B. bei einer Durchfahrt durch einen Tunnel geht die Zeitsynchronisation nicht verloren, so daß ein Benutzer des Funkempfängers keine Qualitätseinbußen nach Empfangsunterbrechung erfährt.

Es wird ein Maß aus den vergangenen Fehlerwerten berechnet, um die Korrektur der Zeitsynchronisation während der Empfangsunterbrechung zu ermitteln. Damit werden die vergangenen Abweichungen bei der Zeitsynchronisation zur Vorhersage der Abweichung bei Empfangsunterbrechung herangezogen.

Es ist von Vorteil, daß sehr große Fehlerwerte, die mittels des TFPR-Symbols berechnet werden, verworfen werden. Insbesondere Fehlerwerte, die durch einen kurzfristigen Senderwechsel bei zum Beispiel einem Gleichwellennetz, wie es bei DAB der Fall ist, hervorgerufen werden, werden dadurch eliminiert. Dadurch werden stark abweichende Werte für die Durchschnittswertbildung ausgeschlossen.

Durch die in den abhängigen Ansprüchen aufgeführten Maßnahmen sind vorteilhafte Weiterbildungen und Verbesserungen des im unabhängigen Patentanspruch angegebenen Verfahrens zum Empfang von Funksignalen über einen Funkkanal möglich.

Besonders vorteilhaft ist, daß mit dem erfindungsgemäßen Verfahren im Empfänger ein Festfrequenzoszillator verwendet werden kann, der äußerst billig ist und den Aufbau des Funkempfängers stark vereinfacht.

Darüber hinaus ist es von Vorteil, daß bei Empfang von DAB das TFPR (Time Frequency Phase Reference = Phasenreferenzsymbol)-Symbols verwendet wird, um die Zeitsynchronisation im Empfänger herzustellen. Dazu wird vorteilhafter Weise mittels des TFPR-Symbols eine Impulsantwort des Funkkanals berechnet, um die Abweichung der Zeitsynchronisation, die durch die Laufzeit bedingt ist, zu berechnen.

In einer vorteilhaften Weiterbildung der Erfindung wird als Maß, das für die vergangenen Fehlerwerte berechnet wird, der Durchschnittswert dieser Fehlerwerte berechnet. Damit werden kurzfristige Abweichungen der Fehlerwerte keinen nennenswerten Einfluß auf die Korrektur der Zeitsynchronisation bei Empfangsausfall haben.

Weiterhin ist es von Vorteil, daß durch einen Vergleich von aufeinanderfolgenden Fehlerwerten vom Empfänger erkannt wird, ob sich ein Trend bei der Entwicklung der Fehlerwerte abzeichnet, so daß eine Vorhersage der zukünftigen Abweichungen aufgrund dieses Trends möglich wird. Dadurch wird eine adaptive Regelung der Zeitsynchronisation bei Empfangsausfall erreicht.

Darüber hinaus ist es von Vorteil, daß das Auftreten eines Senderwechsels bei einem Gleichwellennetz erkannt wird. Dadurch werden vorteilhafterweise nur Fehlerwerte, die für einen zum Empfang genutzten Sender berechnet wurden, zur Durchschnittsbildung herangezogen.

### Zeichnung

Ausführungsbeispiele der Erfindung sind in der Zeichnung dargestellt und in der nachfolgenden Beschreibung näher erläutert. Es zeigen Figur 1 ein Verfahren zur Zeitsynchronisation, Figur 2 einen DAB-Rahmen, Figur 3 zwei Impulsantworten und Figur 4 ein Verfahren zur adaptiven Zeitsynchronisation bei Empfangsausfall.

### Beschreibung der Ausführungsbeispiele

Bei der Zeitsynchronisation von Funksignalen, die in Rahmen übertragen werden, wie es z.B. digitale Rundfunkübertragungsverfahren wie bei DAB der Fall ist, wird im Empfänger auf den Rahmenanfang synchronisiert. Diese Synchronisation auf den Rahmenanfang ist notwendig, damit die Informationen, die zu Beginn des Rahmens übertragen werden, von dem Empfänger gelesen werden können und damit der Rahmen überhaupt dekodiert werden kann. Insbesondere bei DAB beinhalten die Informationen am Rahmenanfang Daten über die übrigen Daten, die innerhalb dieses Rahmens übertragen werden. Hat nun der Empfänger im Vergleich zum Sender eine unterschiedliche Frequenz, mit der der Empfänger die Rahmen verarbeitet, dann verschiebt sich die Synchronisation vom Rahmenanfang weg und somit kann der Empfänger die Informationen im Rahmen nicht mehr korrekt verarbeiten. Daher ist eine Regelung der Zeitsynchronisation erforderlich, insbesondere wenn die Taktfrequenz im Empfänger nicht nachgeregelt werden kann.

Wird die Frequenz im Empfänger nicht nachgeregelt, muß im Empfänger ein Zeiger auf den Datenstrom gesetzt werden, wo der Rahmen beginnt. Der Zeiger ist ein Datum, das durch die Software, die den Empfänger steuert, gesetzt wird. Der Zeiger weist auf eine Speicheradresse, hier also die Speicheradresse, bei der der Rahmenbeginn abgelegt ist.

Dieser Zeiger wird z.B. durch einen Prozessor in einem Empfänger gesetzt. Liegt nun ein Fehler bei der Synchronisation vor, dann zeigt dieser Zeiger nicht mehr auf den Beginn des im Moment zu verarbeitenden Rahmens. Dann muß dieser Zeiger entsprechend eines Fehlerwerts verschoben werden, so daß der Zeiger wieder auf den Anfang des Rahmens zeigt. Der Fehlerwert bezeichnet also hier den Zeitfehler bei der Zeitsynchronisation.

Bei DAB handelt es sich um ein Multifrequenzträgerübertragungssystem mit hoher Bandbreite. Innerhalb dieses digitalen terrestrischen Hörfunksystems kommt das Modulationsverfahren orthogonaler Frequenzmultiplex (Orthogonal Frequency Division Multiplex = OFDM) zum Einsatz. OFDM ist ein Modulationsverfahren, bei dem das zu übertragende Signal auf mehrere Unterträger verteilt wird, wobei sich die auf diese Unterträger verteilten Signale gegenseitig nicht stören. Dieses Verhalten wird mit orthogonal beschrieben.

Im Übertragungsmodus II bei DAB liegt ein Rahmen mit einer Zeitdauer von 24 ms vor. Die Abtastfrequenz beträgt 2,048 MHz, wobei sich für den Rahmen 49152 Abtastwerte ergeben. Besteht ein Frequenzunterschied bei der Abtastfrequenz zwischen Sender und Empfänger von 0,005%, entsteht eine Taktdrift von ungefähr 2,46 Abtastperioden pro 24 ms-Rahmen. Der Empfänger muß demnach für eine korrekte zeitliche Synchronisation bei jedem 24 ms-Rahmen den Zeiger auf den Rahmenbeginn um 2,46 Abtastwerte verschieben. Bei einer längeren Unterbrechung des Empfangs, zum Beispiel aufgrund von Tunneldurchfahrten, ist eine korrekte zeitliche Synchronisation bei erneutem Empfang zunächst nicht mehr möglich. Das erfindungsgemäße Verfahren vermeidet eine dann erforderliche Neusynchronisation.

Neben DAB weisen auch andere Rundfunkübertragungsverfahren, wie z.B. DVB (Digital Video Broadcasting) und DRM (Digital Radio Mondial) eine Rahmenstruktur auf, wobei auch diese Rundfunkübertragungsverfahren das Modulationsverfahren OFDM aufweisen. Diese Verfahren unterscheiden sich von DAB zum einen durch den Aufbau der Rahmenstruktur und zum anderen durch die Sendefrequenzbereiche und Übertragungsrate. Bei DVB und auch DRM werden Testsignale zur Bestimmung der Impulsantwort und damit zur Zeitsynchronisation verwendet.

Ein Oszillator, also eine Schaltung, die Schwingungen erzeugt, der nur Schwingungen mit einer Frequenz abgibt, wird als Festfrequenzoszillator bezeichnet. Der spannungsgesteuerte Oszillator dagegen kann durch die Veränderung einer anliegenden Spannung zur Abgabe einer Schwingung mit veränderter Frequenz gezwungen werden. Der Festfrequenzoszillator ist aufgrund seiner einfacheren Struktur billiger und einfacher in der Herstellung.

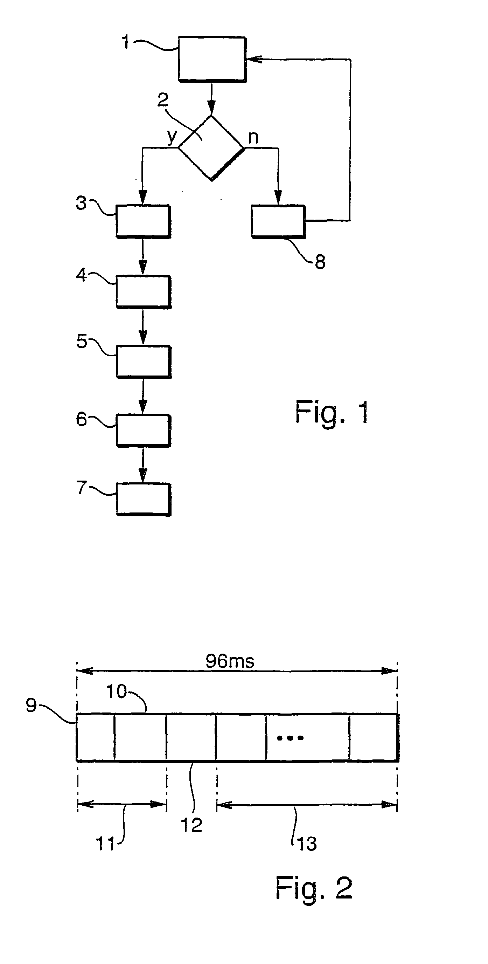

In Figur 1 ist ein Verfahren zur Zeitsynchronisation dargestellt. Dieses Verfahren läuft hier in einem DAB-Empfänger ab, wobei dieses Verfahren durch Software, die auf einem Prozessor des DAB-Empfängers abläuft, gesteuert wird.

In Verfahrensschritt 1 wird das Verfahren begonnen. In Verfahrensschritt 2 wird überprüft, ob im Moment ein Empfang von DAB-Rundfunksignalen vorliegt. Das wird dadurch festgestellt, daß die Signalleistung beobachtet wird. Ist Signalleistung über einer vorgegebenen Schwelle zu erkennen, liegt ein DAB-Rundfunksignal vor, ansonsten nicht.

Liegt ein Empfang von DAB-Rundfunksignalen vor, dann wird in Verfahrensschritt 3 ein Vergleich des Phasenreferenzsymbols, das im empfangenen Rahmen vorliegt, mit einem Phasenreferenzsymbol, das im Empfänger abgespeichert ist, vorgenommen. Dieser Vergleich wird zur Ermittlung einer Impulsantwort eines Funkkanals vorgenommen.

In Figur 2 ist ein DAB-Rahmen für die DAB-Mode 1 gezeigt. Der DAB-Rahmen hat hier eine Breite von 96 ms. Innerhalb des DAB-Rahmens wird zuerst der Synchronisierungskanal 11 übertragen, indem sich das Nullsymbol 9 und das Phasenreferenzsymbol 10 befinden. Dann werden im Fast-Information-Channel 12 Informationen darüber übertragen, wo im Main-Service-Channel 13 den Programmen und Daten zugeordnete Daten zu finden sind, und wie die jeweilige Kanalcodierung aussieht. Der Main-Service-Channel 13 wird mit den restlichen 72 OFDM-Symbolen übertragen. Der Main-Service-Channel 13 enthält die eigentlichen Nutzdaten, wie Audiosignale oder Zusatzdaten.

Mittels des Phasenreferenzsymbols aus dem DAB-Rahmen wird die Impulsantwort des Funkkanals ermittelt. Das Phasenreferenzsymbol wird in jedem Rahmen, also alle 96 ms, übertragen. Dieser Takt wird im folgenden mit Rahmentakt bezeichnet. Die Impulsantwort wird so berechnet, daß zunächst die frequenzabhängige Übertragungsfunktion H(f) zu bestimmen ist H(f) wird ermittelt, indem das Empfangssignal mit dem komplex konjugierten Sendesignal multipliziert wird. Als komplex konjugiertes Sendesignal wird das originale Phasenreferenzsymbol verwendet und konjugiert. Durch Rücktransformation in den Zeitbereich gewinnt man aus der Übertragungsfunktion H(f) die Impulsantwort h(t). Vor der Bestimmung der Übertragungsfunktion H(f) wurde das Phasenreferenzsymbol durch Transformation von dem Zeitbereich in den Frequenzbereich transformiert.

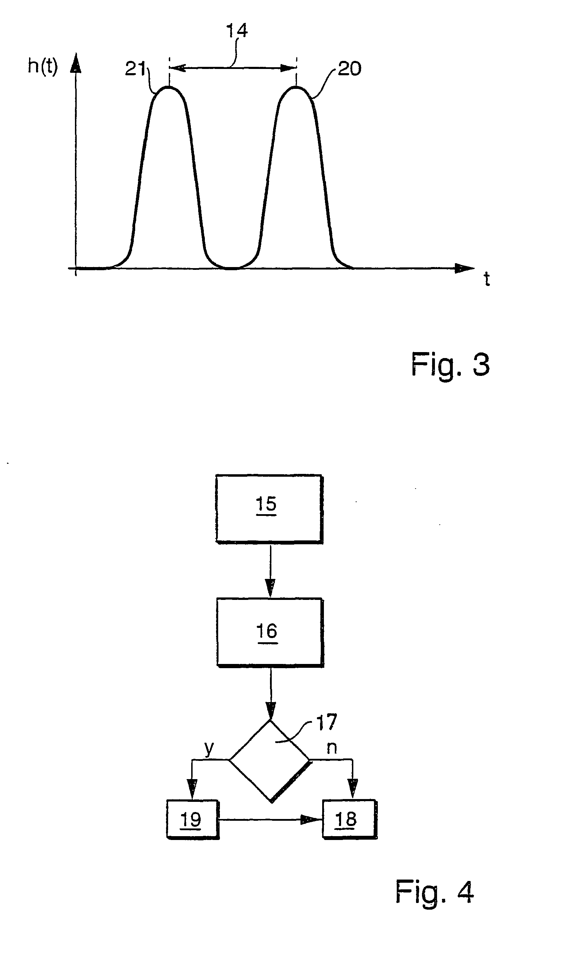

In Figur 3 sind zwei Impulsantworten des Funkkanals dargestellt. Der Spitzenwert der im Moment berechneten Impulsantwort 21 des Funkkanals wird mit einer weiteren Impulsantwort 20 als Referenz verglichen, wobei die Abweichung 14 von dieser Referenz den Fehlerwert für die Zeitsynchronisation ergibt.

Diese Referenz liegt bei dem Auftreten eines Spitzenwerts bei der Impulsantwort in der Mitte der Zeitwerte, die für die Berechnung der Impulsantwort herangezogen wurden. Das kommt daher, daß mittels einer schnellen Fouriertransformation (engl. Fast Fourier Transformation = FFT) die Überführung eines Zeitsignals in den Frequenzbereich durchgeführt wird. Ein Zeitfenster wird hierbei für die FFT verwendet, das über die Werte gelegt wird, die von dem Zeitbereich in den Frequenzbereich transformiert werden, damit sind die Werte für die Bestimmung der Übertragungsfunktion und folglich der Impulsantwort festgelegt. Mittels einer inversen schnellen Fouriertransformation wird die Übertragungsfunktion aus dem Frequenzbereich in den Zeitbereich überführt.

Ist der Empfänger korrekt synchronisiert, dann liegt das Zeitfenster für die FFT direkt über dem Phasenreferenzsymbol, womit der Spitzenwert der Impulsantwort dann in der Mitte des Zeitfensters auftreten wird. Ist der Empfänger nicht korrekt synchronisiert, dann ist auch der Spitzenwert der Impulsantwort entsprechend verschoben, womit der Fehlerwert für die Zeitsynchronisation berechnet wird.

Liegen im übrigen mehrere Spitzenwerte in der Impulsantwort vor, gilt es, alle diese Spitzenwerte innerhalb des Zeitfensters der FFT zu haben und zum Beispiel der Zeitpunkt größter Energie in der Impulsantwort zu berechnen und die Abweichung von der zeitlichen Mitte der Impulsantwort zu bestimmen, um den Fehlerwert bei der Zeitsynchronisation zu ermitteln. Eine Methode, um die Plazierung des FFT-Fensters festzulegen, ist die Strategie, den Abstand der Spitzenwerte von den Rändern des Zeitfensters zu maximieren.

In Verfahrensschritt 4 wird ein Durchschnittswert der Fehlerwerte für 100 Rahmen berechnet. Dazu werden die Fehlerwerte der letzten 100 Rahmen addiert und durch 100 dividiert. Im übrigen kann eine größere oder kleinere Anzahl von Rahmen zur Durchschnittswertbildung herangezogen werden, fern dies notwendig erscheint oder durch z.B. Speicherplatzressourcen im Empfänger ermöglicht wird.

In Verfahrensschritt 5 wird der Durchschnittswert abgespeichert. In Verfahrensschritt 6 wird die Zeitsynchronisation im DAB-Empfänger um den Fehlerwert korrigiert, der für den aktuellen Rahmen ermittelt wurde. Dafür wird der Zeiger, der auf den um den Fehlerwert falsch angenommenen Rahmenbeginn zeigt, nun auf den korrekten Rahmenbeginn gesetzt. In Verfahrensschritt 7 werden im Empfänger die Daten, die im aktuellen Rahmen enthalten sind, verarbeitet. Bei DAB wird also hier eine Decodierung vorgenommen.

Liegt kein Empfang von DAB-Rundfunksignalen vor, zum Beispiel bei Tunneldurchfahrten, dann wird in Verfahrensschritt 8 der Zeiger, der auf den Rahmenbeginn zeigt und damit die Zeitsynchronisation um den Durchschnittswert, der zuletzt abgespeichert wurde, korrigiert. Dabei kann der Durchschnittswert positiv sein oder auch negativ, denn eine Fehlsynchronisation kann in beiden Richtungen vorliegen, da die Frequenz durch den Oszillator in dem Empfänger entweder zu groß oder zu klein im Vergleich zur Frequenz im Sender sein kann.

Bei DAB liegt ein Gleichwellennetz vor. Die Sender werden also bei einer bestimmten Frequenz betrieben. Daher kann es geschehen, daß bei einem Senderwechsel, also wenn das Signal eines Senders nicht mehr empfangbar ist und nur noch das Signal eines anderen Senders empfangbar ist, ein sehr großer Fehlerwert bei der Zeitsynchronisation auftritt. Ist dieser Wechsel nur kurzfristig, dann verwirft der Empfänger diesen Fehlerwert, um den Durchschnittswert der Fehlerwerte nicht zu verzerren. Der Empfänger verwirft den Fehlerwert jedoch nicht gleich, denn es kann sich ein dauerhafter Wechsel des Senders abzeichnen. Daher ermittelt der Empfänger weitere Fehlerwerte, bis eine vorgegebene Anzahl von Fehlerwerten erreicht ist. Dann ermittelt der Empfänger den Durchschnittswert und untersucht die Fehlerwerte, ob die Fehlerwerte stark von diesem Durchschnittswert abweichen. Dafür ist ein vorgegebener Schwellwert im Empfänger abgespeichert. Der Fehlerwert wird mit diesem Schwellwert verglichen, liegt der Fehlerwert darüber, dann wird der Fehlerwert verworfen.

Ist der Senderwechsel jedoch von Dauer dann wird der Empfänger die Fehlerwerte, die sich für den ersten Sender ergeben haben, der nun nicht mehr zum Empfang genutzt wird, verwerfen, um einen Durchschnittswert der Fehlerwerte nur für den jetzt verwendeten Sender zu bilden. Dafür bildet der Empfänger zwei Durchschnittswerte, einen für die Fehlerwerte vor dem Fehlerwert, der stark von dem Durchschnittswert abweicht, und einen für die Fehlerwerte, die nach dem Fehlerwert folgen, der stark abweicht. Ist die Differenz der beiden Durchschnittswerte unter einem vorgegebenen Schwellwert, dann liegt kein dauerhafter Senderwechsel vor, ist es jedoch der Fall, dann liegt ein dauerhafter Senderwechsel vor.

Im übrigen ist es bei DAB denkbar, kein Gleichwellennetz zu betreiben und ein Gebiet mit einem Sender zu versorgen.

In Figur 4 wird ein Verfahren gezeigt, das zur adaptiven Aufrechterhaltung der Zeitsynchronisation bei Empfangsausfall dient.

In Verfahrensschritt 15 werden die Fehlerwerte, wie oben beschrieben, berechnet. In Verfahrensschritt 16 wird der aktuelle Fehlerwert mit mindestens zwei vergangenen berechneten Fehlerwerten verglichen. In Verfahrensschritt 17 wird überprüft, ob die Differenz zwischen diesen Fehlerwerten eine monoton steigende oder monoton fallende Funktion zugrundeliegt, so daß die Aussage getroffen werden kann, ob sich aus der Differenz der Fehlerwerte ein Trend abzeichnet, der zum Beispiel auf Temperatureffekten beruht. Wird solch ein Trend erkannt, dann wird in Verfahrensschritt 19 durch eine Extrapolation der Funktion die zukünftigen Fehlerwerte abgeschätzt, um bei einem Empfangsausfall die Zeitsynchronisation um diese Fehlerwerte zu korrigieren.

Extrapolation heißt hier, daß die zukünftigen Fehlerwerte beispielsweise in der Weise berechnet werden, daß der letzte berechnete Fehlerwert, als noch Empfang von Rundfunksignalen vorhanden war, für den ersten Fehlerwert, wenn schon kein Empfang von Rundfunksignalen mehr vorliegt, um den Wert verändert wird, um den sich der vorletzte Fehlerwert zu dem letzten Fehlerwert bei Rundfunkempfang verändert hatten. Es ist also hier eine einfache lineare Extrapolation.

Läßt sich kein Trend aus dem Vergleich der Fehlerwerte ablesen, dann wird in Verfahrensschritt 18 die Zeitsynchronisation bei Empfang von Rundfunksignalen um den Fehlerwert korrigiert oder bei einer Empfangsunterbrechung um den Durchschnittswert der letzten Fehlerwerte.

## Patentansprüche

1. Verfahren zum Empfang von Funksignalen über einen Funkkanal, wobei den Funksignalen, die in Rahmen versendet werden, sendeseitig Symbole in einem Rahmentakt zur Zeitsynchronisation hinzugefügt werden, wobei ein Empfänger auf die empfangenen Symbole zur Zeitsynchronisation synchronisiert wird, indem die Symbole zur Zeitsynchronisation durch den Empfänger erkannt werden, wobei bei Empfang von Funksignalen mit Symbolen zur Zeitsynchronisation die empfangenen Symbole mit in dem Empfänger abgespeicherten Symbolen verglichen werden (3), um einen Fehlerwert bei der Zeitsynchronisation pro Rahmentakt zu erhalten, wobei der Fehlerwert ein Zeitdifferenzwert ist, wobei ein Maß der Fehlerwerte bei der Zeitsynchronisation über mehrere empfangene Symbole berechnet wird (4), wobei das Maß im Empfänger abgespeichert wird (5), wobei beim Empfang von den Funksignalen mit den Symbolen zur Zeitsynchronisation die Zeitsynchronisation um den zuletzt ermittelten Fehlerwert bei der Zeitsynchronisation korrigiert wird (6), wobei in einem Zeitabschnitt ohne Empfang von Funksignalen die zeitliche Synchronisation pro Rahmentakt um das abgespeicherte Maß verändert wird und daß die zeitsynchronisierten Funksignale im Empfänger weiterverarbeitet werden (7), **dadurch gekennzeichnet, daß** ein Vergleich des Fehlerwerts, der für das aktuelle Symbol berechnet wurde, mit den Fehlerwerten durchgeführt wird (16), die für vergangene Rahmentakte berechnet wurden und daß für die Fehlerwerte als Maß eine durchschnittliche Veränderung der Fehlerwerte berechnet wird (19), falls durch den Vergleich der Fehlerwerte eine monoton steigende oder fallende Veränderung der Fehlerwerte erkannt wird (17), wobei dieses Maß zu dem letzten berechneten Fehlerwert addiert wird, um damit die Veränderung der Zeitsynchronisation zu ermitteln.

2. Verfahren nach Anspruch 1, **dadurch gekennzeichnet, daß** als das Maß der Fehlerwerte ein Durchschnittswert der Fehlerwerte verwendet wird, so daß bei Empfangsausfall die Zeitsynchronisation um den Durchschnittswert der vergangenen Fehlerwerte korrigiert wird.

3. verfahren nach Anspruch 1 oder 2, **dadurch gekennzeichnet, daß** zur Erzeugung des Rahmentakts im Empfänger ein Festfrequenzoszillator verwendet wird.

4. Verfahren nach Anspruch 1 oder 2, **dadurch gekennzeichnet, daß** als Symbol zur Zeitsynchronisation ein TFPR-Symbol (10) verwendet wird.

5. Verfahren nach Anspruch 4, **dadurch gekennzeichnet, daß** aus dem TFPR-Symbol (10) eine Impulsantwort des Funkkanals ermittelt wird und daß aus der Impulsantwort der Fehlerwert bei der Zeitsynchronisation ermittelt wird.

6. Verfahren nach Anspruch 5, **dadurch gekennzeichnet, daß** die Fehlerwerte bei vergangenen Rahmentakten bei der Zeitsynchronisation, die eine vorgegebene Differenz verglichen mit dem Durchschnittswert überschreiten, verworfen werden.

7. Verfahren nach Anspruch 6, **dadurch gekennzeichnet, daß** ein erster Durchschnittswert für Fehlerwerte vor und ein zweiter Durchschnittswert für die Fehlerwerte nach einem Fehlerwert berechnet wird, wobei dieser Fehlerwert mehr als die vorgegebene Differenz von dem Durchschnittswert für alle Fehlerwerte abweicht, und daß, wenn eine Differenz der beiden Durchschnittswerte einen vorgegebenen Wert überschreitet, die Fehlerwerte, die zur Berechnung des ersten Durchschnittswerts herangezogen wurden, verworfen werden, und nun die Fehlerwerte, die für die Berechnung des zweiten Durchschnittswerts benutzt wurden, weiter für die Ermittlung des Durchschnittswerts verwendet werden.

## Claims

1. Method for receiving radio signals via a radio channel, wherein symbols in a frame clock cycle are added to the radio signals, which are sent out in frames, at the transmitting end for the purpose of timing synchronization, wherein a receiver is synchronized to received symbols for timing synchronization in that the symbols for the timing synchronization are detected by the receiver, wherein, on receiving radio signals with symbols for timing synchronization, the received symbols are compared with symbols stored in the receiver (3) in order to obtain an error value during the timing synchronization per frame clock cycle, wherein the error value is a timing difference value, wherein a measure of the error values in a timing synchronization is calculated over a number of received symbols (4), wherein the measure is stored in the receiver (5), wherein, when receiving the radio signals with the symbols for the timing synchronization, the timing synchronization is corrected by the last error value determined in the timing synchronization (6), wherein the time synchronization is changed by the stored measure per frame clock cycle in a time interval without reception of radio signals, and that the time-synchronized radio signals are processed further in the receiver (7), **characterized in that** the error value which was calculated for the current symbol is compared (16) with the error values which were calculated for past frame clock cycles and that as a measure, an average change in the error values is calculated for the error values (19) if a monotonously rising or falling change in the error values is detected (17) by the comparison of the error values, this measure being added to the last error value calculated in order to determine by this means the change in the timing synchronization.

2. Method according to Claim 1, **characterized in that** an average value of the error values is used as the measure of the error values so that in the case of a failure of reception, the timing synchronization is corrected by the average value of the past error values.

3. Method according to Claim 1 or 2, **characterized in that** a fixed-frequency oscillator is used for generating the frame clock cycle in the receiver.

4. Method according to Claim 1 or 2, **characterized in that** a TFPR symbol (10) is used as symbol for timing synchronization.

5. Method according to Claim 4, **characterized in that** an impulse response of the radio channel is determined from the TFPR symbol (10) and that the error value in the timing synchronization is determined from the impulse response.

6. Method according to Claim 5, **characterized in that** the error values in past frame clock cycles in the timing synchronization which exceed a predetermined difference compared with the average value are discarded.

7. Method according to Claim 6, **characterized in that** a first average value for error values before and a second average value for the error values after an error value is calculated, wherein this error value deviates from the average value for all error values more than the predetermined difference, and that, if a difference of the two average values exceeds a predetermined value, the error values which were used for calculating the first average value are discarded and now the error values which were used for calculating the second average value continue to be used for determining the average value.

## Revendications

1. Procédé de réception de signaux radio par un canal radio, selon lequel :
- aux signaux radio émis en trame, on ajoute côté émetteur, des symboles dans une cadence de trame pour réaliser une synchronisation,
- on synchronise un récepteur aux symboles reçus, et le récepteur reconnaît les symboles de cette synchronisation,
- lors de la réception des signaux radio accompagnés des symboles destinés à la synchronisation, on compare (3) ces symboles reçus aux symboles enregistrés dans le récepteur, afin d'obtenir une valeur d'erreur dans la synchronisation pour la cadence de trame,
- la valeur d'erreur est une différence de temps et on calcule (4) une mesure de ces valeurs d'erreur lors de la synchronisation par l'intermédiaire de plusieurs symboles reçus,
- on enregistre (5) cette mesure dans le récepteur,
- lors de la réception des signaux radio avec les symboles destinés à la synchronisation, on corrige (6) celle-ci de la dernière valeur d'erreur établie lors de la synchronisation,
- pendant un intervalle de temps sans réception de signaux radio, la synchronisation, pour la cadence de trame, est modifiée de la valeur enregistrée et on traite (7) les signaux radio synchronisés dans le récepteur,
**caractérisé en ce que**
- on effectue (16) une comparaison de la valeur d'erreur calculée pour le symbole actuel, avec les valeurs d'erreur calculées pour les cadences de trame antérieures,
- on calcule (19) comme mesure des valeurs d'erreur, une variation moyenne des valeurs d'erreur,
- dans le cas où cette comparaison des valeurs d'erreur fait apparaître (17) une variation monotone croissante ou décroissante des valeurs d'erreur, on ajoute cette mesure à la dernière valeur d'erreur calculée, pour déterminer ainsi la variation de la synchronisation.

2. Procédé selon la revendication 1,
**caractérisé en ce qu'**
on utilise comme mesure des valeurs d'erreur une valeur moyenne de ces valeurs, de sorte que dans le cas d'une défaillance de réception, la synchronisation est corrigée de la valeur moyenne des valeurs d'erreur antérieures.

3. Procédé selon la revendication 1 ou 2,
**caractérisé par**
un oscillateur à fréquence fixe qui produit la cadence de trame dans le récepteur.

4. Procédé selon la revendication 1 ou 2,
**caractérisé par**
un symbole TFPR (10) pour la synchronisation.

5. Procédé selon la revendication 4,
**caractérisé en ce qu'**
à partir du symbole TFPR (10), une réponse impulsionnelle du canal radio, permet d'établir la valeur d'erreur lors de la synchronisation.

6. Procédé selon la revendication 5,
**caractérisé en ce qu'**
on rejette les valeurs d'erreur établies lors de la synchronisation dans les cadences de trame antérieures qui, comparées à une valeur moyenne, dépassent une différence prédéfinie.

7. Procédé selon la revendication 6,
**caractérisé en ce qu'**
on calcule une première moyenne de valeurs d'erreur avant une valeur d'erreur, et on calcule une seconde moyenne de valeurs d'erreur après cette valeur d'erreur, qui s'écarte plus que d'une différence prédéfinie de la moyenne de toutes les valeurs d'erreur et, quand une différence des deux valeurs moyennes dépasse une valeur prédéfinie, les valeurs d'erreur utilisées pour calculer la première valeur moyenne sont rejetées et, les valeurs d'erreur utilisées pour le calcul de la seconde valeur moyenne continuent à être utilisées pour déterminer la valeur moyenne.
